# EUROPEAN PATENT SPECIFICATION

(11) **EP 2 214 469 B1**
(45) Date of publication and mention of the grant of the patent: **25.12.2019**
(21) Application number: 08843730.6
(22) Date of filing: 29.10.2008
(51) Int. Cl.: A01D 43/063, A01D 34/49

(54) **A LAWNMOWER ASSEMBLY**
RASENMÄHERANORDNUNG
ENSEMBLE DE TONDEUSE À GAZON

(30) Priority: 31.10.2007 SE 0702416
(43) Date of publication of application: 11.08.2010
(73) Proprietor: Speedcutbox AB, 305 97 Eldsberga (SE)
(72) Inventor: KARLSSON, Ola, 310 31 Eldsberga (SE)
(74) Representative: Bergenstråhle Group AB
(86) International application number: PCT/SE2008/000614
(87) International publication number: WO 2009/058064

(56) References cited:
- EP-A1- 0 523 866
- EP-A1- 0 824 853
- EP-A1- 0 981 942
- EP-A1- 1 138 187
- WO-A1-2007/118926
- FR-A1- 2 713 881
- GB-A- 290 774
- US-A- 3 816 986
- US-A- 4 344 273
- US-A- 5 157 907
- US-A1- 5 412 931

## Description

### TECHNICAL FIELD

The present invention relates to a lawnmower assembly for use in a lawnmower and comprising a cylinder mower with a rotor provided with a number of cutters for cooperation with a fixed blade, support rollers for supporting and vertical adjustment of the cylinder mower and a receptacle for mown grass.

### BACKGROUND ART

Lawnmower assemblies of the type disclosed by way of introduction are previously known in the art and are employed on a large scale in lawnmowers for mowing golf courses etc.

A plurality of lawnmower assemblies of the above-mentioned type are mounted in position on one and the same lawnmower, for example five in number. On lawnmowers specifically intended for mowing golf course greens, use is normally made of three such assemblies, two in a front row and one trailing behind. The assemblies are positioned beneath the lawnmower and are pivotal about vertical axes so that they can "steer along" when the lawnmower is turned.
The lawnmower assemblies have support rollers that rest on the ground and are used for adjusting the mowing height which can be varied.

On mowing of golf course greens, extremely stringent demands are placed on the quality and evenness of the cut, and the mowing height is normally approximately 3 mm.
For each lawnmower assembly, there is provided a receptacle that collects the grass cuttings. The receptacles are manually releasable from the lawnmower assemblies so that they can be emptied at the intended place.

The space where the lawnmower assemblies and their receptacles for grass cuttings are mounted is limited in the extreme. The distance from the underside of a receptacle down to the ground level is only about 20-25 mm on a lawnmower intended for mowing golf course greens.

The actual emptying operation of the receptacles is an uncomfortable and time-consuming task, since the driver of the lawnmower must dismount from the seat and manually lift off each receptacle in turn and thereafter empty it and once again refit the receptacle on the lawnmower.

In most cases, the receptacle is suspended in such a manner that its weight acts on the lawnmower assembly and its support rollers, and so the mowing height in such cases will vary depending on how full the receptacle is at the time. This implies that the mowing result will be uneven, which is not acceptable in green mowing. In addition, frequent driving of the lawnmower with a full or almost full receptacle load entails a compaction of the ground, which is a serious drawback since the grass cannot then 'breathe'.

The manual emptying of the receptacles also implies that the driver of the lawnmower will attempt to empty the receptacles with as long a time interval as possible. This entails that the above-outlined problems with varying mowing height and compacting of the ground are further aggravated.

WO 2007/118926 discloses an arrangement for collecting clippings, which includes a blower for transporting the clippings through transport ducts from the cutting units to a central collecting tank on the frame of the mower. The central collecting tank has a discharge opening with a lid for emptying the clippings from the tank.

US 5412 931 A1 discloses an arrangement for collecting clippings in a container, which includes a mechanism allowing an operator to disengage a hook member from a rail and thereby slide the container towards the operator while another hook member slides along in engagement with the rail and thereby facilitating removal of clippings from the container.

### PROBLEM STRUCTURE

The present invention has for its object to design the lawnmower assembly mentioned by way of introduction such that the drawbacks inherent in the prior art technology are obviated. In particular, the present invention has for its object to avoid the need for manually dismounting receptacles for emptying. The present invention also has for its object to permit convenient emptying at short time intervals.

### SOLUTION

The objects forming the basis of the present invention will be attained by providing a lawnmower assembly according to claim 1.

Given that the space in which the lawnmower assembly and its receptacle are placed is extremely limited, it has proved according to the present invention to be highly advantageous if the openable bottom section has a partly cylindrical arching and that it is pivotal between the closed and opened position.

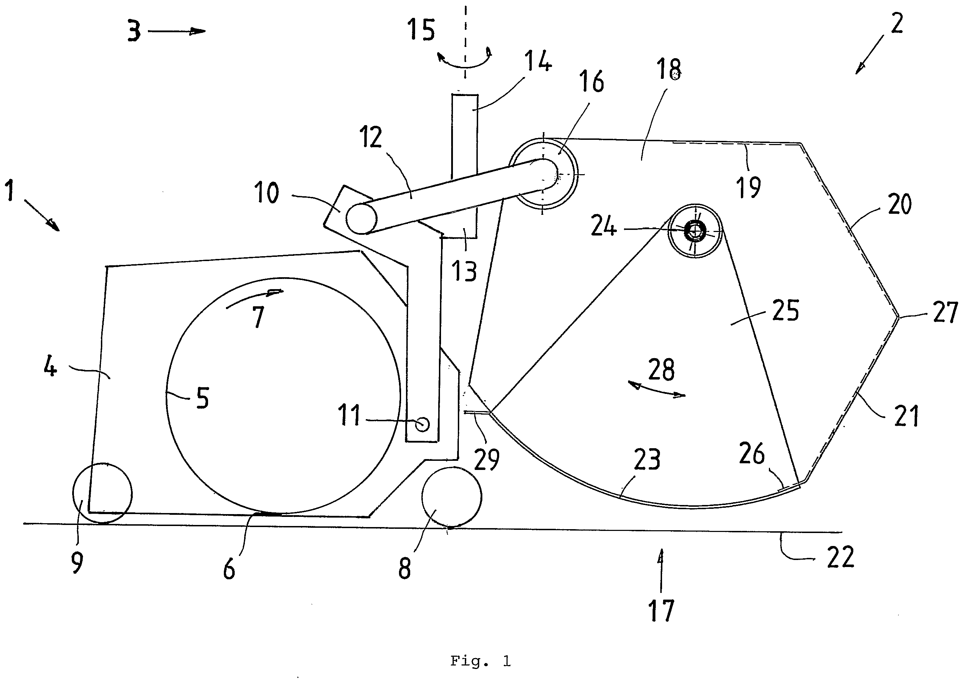

### BRIEF DESCRIPTION OF THE ACCOMPANYING DRAWING

The present invention will now be described in greater detail hereinbelow, with reference to the accompanying single Drawing which illustrates the subject matter of the present invention seen from the side in highly schematic presentation.

### DESCRIPTION OF PREFERRED EMBODIMENT

While the present invention is applicable to lawnmowers for many different fields of use, it will be described with reference to an embodiment which is particularly suitable for the mowing of golf course greens.

In the following disclosures, use will be made of expressions such as "forward", "rear", "upper" and "lower". These expressions relate to conditions prevailing in the normal running of the lawnmower while mowing.

Referring to the Drawing, the subject matter of the present invention comprises a cylinder mower 1 with associated receptacle bin 2. As was intimated by way of introduction, a plurality of such lawnmower assemblies is disposed beneath a lawnmower for mowing golf course greens, for example three such assemblies may be employed. On driving of the lawnmower, the direction of movement is that which is illustrated by means of the arrow 3.

The cylinder mower 1 is constructed around two end plates or pieces 4, of which only one is shown in the Drawing. Both of the end pieces are rigidly interconnected by the intermediary of transverse stays and plates which are not shown in the Figure. In both of the end pieces 4, there is journalled a rotor 5 which is provided with a number of cutters which are disposed to cooperate with a fixed blade 6 which is connected to both of the end pieces 4. The rotor 5 rotates in accordance with the arrow 7 and is driven by a motor (not shown), which is also mounted on of the two end pieces 4. In a diesel-hydraulic powered lawnmower, the motor is advantageously hydraulic, while in an electrically driven lawnmower, it is suitably electric.

The cylinder mower 1 is supported by support rollers, one forward 8 and one rear 9, which in a manner not shown in greater detail, are vertically adjustably secured in the cylinder mower, possibly in its end pieces 4. There are also cylinder mowers with three support rollers. By vertical adjustment of the support rollers 8 and 9, the mowing height may be set, as well as the slant of the fixed blade 6.

While not being apparent from the Drawing, there is disposed a hood along a part of the periphery of the rotor 5, in particular its rear and upper regions, whose purpose is to direct the air flow generated by the rotor and grass cuttings borne thereon, so that the flow is led from the fixed blade 6 up along the rear side of the rotor 5 in order to be ejected in a direction substantially forwards, but possibly slightly upwards into the receptacle bin 2. The air current and the grass cuttings borne on the air current depart from the rotor region approximately in the direction of the tangent at the upper region of the rotor approximately at the position of the arrow 7.

The cylinder mower 1 is connected to the lawnmower by the intermediary of a suspension device which includes a pendulum arm 10 fixedly secured in each end piece 4. The lower ends of the pendulum arms 10 are connected via pivots 11 to the end pieces at forward, lower regions thereof. Between the upper ends of the pendulum arms 10, there extends a connection stay (not shown on the Drawing) which, on the outside of the two pendulum arms 10, merges into forwardly directed arms 12 in whose forward ends the receptacle bin 2 is secured. In the central region of the transverse stay (not shown), there is disposed a forwardly directed rod 13 in whose forward end an upwardly directed, substantially vertical stub shaft 14 is secured. The stub shaft 14 serves for suspending the lawnmower assembly in the lawnmower and permits a pivoting of the entire assembly in accordance with the double-headed arrow 15 so that the lawnmower assembly can accompany steering movements. The stub shaft 14 is connected to the lawnmower assembly such that it can be raised 100-150 mm when no mowing is to be put into effect, for example on emptying of the receptacle bin.

According to the present invention, it is also possible to suspend the receptacle bin 2 direct in the lawnmower, possibly in the lifting arrangement which is used for raising and lowering the cylinder mower 1. In this alternative, no varying level of filling of the bin will give rise to varying load on the support rollers 8 and 9, but this varying load rests of the wheels of the lawnmower.

The receptacle bin 2 consists of a fixed portion, which in an upper, rear area has anchorages 16 for cooperation with corresponding anchorages on the forwardly directed arms 12. This implies that the anchorages 16 may be designed to be retrofitted on an existing cylinder mower 1. Alternatively, the cylinder mower 1 may be provided with other types of anchorages which marry with corresponding anchorages on the receptacle bin 2.

The receptacle bin 2 has an openable bottom portion 17 which is movable between a closed position (shown in the Figure) and an open position for emptying of the receptacle bin 2.

The fixed portion of the receptacle bin 2 comprises two end walls 18 with the above described anchorages 16. The end walls 18 may largely be said to be pentagular in design and are connected by the intermediary of an upper, substantially horizontal wall 19, which in its forward edge, is united with an upper/forward wall 20 which, in its lower/forward edge 27, is united with a lower/forward wall 21. The lower/forward wall 21 has a steep slanting angle (of the order of magnitude of 60°) in relation to the ground or substrate 22 on which the lawnmower is driven. The reason for this steep slant is that, in the open state of the openable bottom portion 17, hence on emptying, grass cuttings which have been thrown up towards the lower/forward wall 21 may, even though the grass is wet, readily slip down in a direction along the lower/forward wall.

The side of the receptacle bin 2 facing towards the cylinder mower is open upwards from a height approximately flush with the axis of rotation of the rotor 5 or slightly higher, so that the grass cuttings leaving the cylinder mower can be thrown into the receptacle bin.

The openable bottom portion displays a partly cylindrical arching in the form of an arcuate, lower wall 23. In this embodiment, the openable bottom portion is pivotal between closed and open position via pivot means 24 located at upper regions of the two end pieces 18. In such instance, the pivot axis is horizontal and substantially parallel with the axis of rotation of the rotor 5. The pivot means 24 are connected to the arcuate, lower wall 23 via circle segment formed plates 25, one on each side of the two end pieces 18.

The lower edge portion 26 of the lower/forward wall 21 is located closely adjacent the inside of the arcuate, lower wall 23 and constitutes a doctor or scraper edge for cleaning the inside of the arcuate, lower wall 23 in an emptying movement in accordance with the arrow 28. Further, the lower/forward wall 21 is disposed in such a manner that its upper edge 27 is located more proximal the pivot axis of the pivot means 24 than is the case for the arcuate, lower wall 23. As a result, the arcuate wall 23 may be pivoted to a position just ahead of the upper edge 27 without being impeded in its pivotal movement. Pivoting of the arcuate, lower wall 23 takes place in accordance with the double-headed arrow 28.

At the rear edge (facing towards the rotor 5), the arcuate lower wall 23 has an approximately horizontal portion 29 which faces towards the rotor 5 and which, in the vertical direction, is flush with or slightly above its centre of rotation. The edge portion 29 is, in one practical embodiment, considerably closer to the periphery of the rotor 5 than is apparent from the Figure. The distance between the edge portion and the periphery of the rotor 5 may amount to 5-15 mm and entails that the edge portion 29, as opposed to that which is shown on the Drawing, is located in between the end pieces 4. The edge portion 29 serves the purpose of deflecting such flow components in the air current leaving the rotor, and grass cuttings borne on the air current, such that the flow takes place into the receptacle bin 2 and not down towards the forward support roller 8. In order to permit air flowing into the receptacle bin 2 to depart thence, the upper wall 19 covers only a portion of the upper surface of the receptacle bin.

For opening and closing the openable bottom portion 17, there is disposed on the receptacle bin 2 at least one drive means for realising the opening and closing movements. In the embodiment involving the arcuate and pivotal lower wall 23, such drive means consists of a crank device which is disposed at one or both of the pivots 24 and which serves the purpose of realising a pivotal movement in accordance with the double-headed arrow 28. The drive means may also be pneumatic and, in such instance, requires a compressor mounted on the lawnmower. In another alternative, the drive means may be driven by the existing hydraulic system of the lawnmower, but electrical and purely mechanical solutions and positions are also conceivable.

The present invention should not be considered as restricted to that described above and shown on the Drawing, many modifications being conceivable without departing from the scope defined by the appended Claims.

## Claims

1. A lawnmower assembly for use in a lawnmower and comprising a cylinder mower (1) with a rotor (5) provided with a number of cutters for cooperation with a fixed blade (6), support rollers (8, 9) for supporting and vertical adjustment of the cylinder mower and a receptacle bin (2) for mown grass, the receptacle bin (2) is provided with, at a rear and upper portion, as seen in the direction of driving (3) of the lawnmower, an anchorage (16) for cooperation with a corresponding anchorage (12) on the cylinder mower (1), **characterised in that** the receptacle bin (2) has an openable bottom portion (17), the openable bottom portion (17) has a partly cylindrical, arcuate wall (23); and that it is pivotal between closed and opened position, and the openable bottom portion (17) has a substantially horizontal edge portion (29) directed towards the rotor (5), the edge portion (29) being substantially located flush with, or possibly slightly higher than, the axis of rotation of the rotor (5) and at such a short distance from the periphery of the rotor that an air current generated by the rotor is led into the receptacle bin (2).

2. The lawnmower assembly as claimed in Claim 1, **characterised in that** the openable bottom portion (17) is pivotally (24) connected to upper portions of opposing end pieces (18) for the receptacle bin (2).

3. The lawnmower assembly as claimed in any of Claims 1 or 2, **characterised in that** a pivot axis (24) for the openable bottom portion is substantially parallel with the axis of rotation of the rotor (5).

4. The lawnmower assembly as claimed in any of Claims 1 to 3, **characterised in that** the receptacle bin (2) has a doctor blade edge (26) for scraping off grass cuttings from the openable bottom portion (17) on opening thereof.

5. The lawnmower assembly as claimed in any of Claims 1 to 4, **characterised in that** there is disposed on the receptacle bin (2) drive means for opening and closing of the openable bottom portion (17).

6. Use of a lawnmower assembly as claimed in any of Claims 1 to 5 for lawnmowing golf courses, principally golf course greens.

## Patentansprüche

1. Rasenmäheranordnung zur Verwendung in einem Rasenmäher und umfassend einen Spindelmäher (1) mit einem Rotor (5), der mit einer Anzahl an Schneidelementen zur Zusammenwirkung mit einer festen Klinge (6), Stützrollen (8, 9) zum Stützen und zur vertikalen Einstellung des Spindelmähers und einem Aufnahmebehälter (2) für gemähtes Gras bereitgestellt ist,
wobei der Aufnahmebehälter (2) an einem hinteren und oberen Abschnitt, betrachtet in der Bewegungsrichtung (3) des Rasenmähers, mit einer Verankerung (16) zur Zusammenwirkung mit einer entsprechenden Verankerung (12) am Spindelmäher (1) bereitgestellt ist,
**dadurch gekennzeichnet, dass** der Aufnahmebehälter (2) einen zu öffnenden Bodenabschnitt (17) aufweist, wobei der zu öffnende Bodenabschnitt (17) eine teilweise zylindrische, bogenförmige Wand (23) aufweist; und dadurch, dass er zwischen einer geschlossenen und einer geöffneten Position drehbar ist, wobei der zu öffnende Bodenabschnitt (17) einen im Wesentlichen horizontalen Kantenabschnitt (29) aufweist, der zum Rotor (5) gerichtet ist, wobei der Kantenabschnitt (29) im Wesentlichen bündig mit der Rotationsachse des Rotors (5) oder möglicherweise etwas höher und in einem derart kurzen Abschnitt zum Umfang des Rotors abschließt, dass ein durch den Rotor erzeugter Luftstrom in den Aufnahmebehälter (2) geleitet wird.

2. Rasenmäheranordnung nach Anspruch 1, **dadurch gekennzeichnet, dass** der zu öffnende Bodenabschnitt (17) drehbar (24) mit oberen Abschnitten gegenüberliegender Endteile (18) für den Aufnahmebehälter (2) verbunden ist.

3. Rasenmäheranordnung nach einem der Ansprüche 1 oder 2, **dadurch gekennzeichnet, dass** eine Drehachse (24) für den zu öffnenden Bodenabschnitt im Wesentlichen parallel zur Rotationsachse des Rotors (5) ist.

4. Rasenmäheranordnung nach einem der Ansprüche 1 bis 3,
**dadurch gekennzeichnet, dass** der Aufnahmebehälter (2) eine Rakelklingenkante (26) zum Abstreifen von Grasschnitt von dem zu öffnenden Bodenabschnitt (17) beim Öffnen desselben aufweist.

5. Rasenmäheranordnung nach Anspruch 1 bis 4, **dadurch gekennzeichnet, dass** am Aufnahmebehälter (2) eine Antriebseinrichtung zum Öffnen und Schließen des zu öffnenden Bodenabschnitts (17) angeordnet ist.

6. Verwendung einer Rasenmäheranordnung nach einem der Ansprüche 1 bis 5 zum Mähen von Golfplätzen, insbesondere von Golfrasen.

## Revendications

1. Ensemble de tondeuse à gazon destiné à être utilisé dans une tondeuse à gazon et comprenant un dispositif de tonte à cylindre (1) avec un rotor (5) muni d'un certain nombre de dispositifs de coupe destinés à coopérer avec une lame fixe (6), des rouleaux de support (8, 9) pour supporter et régler verticalement le dispositif de tonte à cylindre et un boîtier de réceptacle (2) pour l'herbe coupée,
le boîtier de réceptacle (2) est pourvu d'un ancrage (16) pour la coopération avec un ancrage correspondant (12) sur le dispositif de tonte à cylindre (1) dans une partie arrière et supérieure, vue dans le sens de l'avancement (3) de la tondeuse à gazon,
**caractérisé en ce que** le boîtier de réceptacle (2) présente une partie inférieure ouvrable (17), la partie inférieure ouvrable (17) présente une paroi partiellement cylindrique et arquée (23); et **en ce qu'**il est pivotant entre la position fermée et la position ouverte, et la partie inférieure ouvrable (17) présente une partie de bord (29) sensiblement horizontale dirigée vers le rotor (5), la partie de bord (29) étant située sensiblement au même niveau que l'axe de rotation du rotor (5) ou éventuellement légèrement plus haut que celui-ci et à une distance si courte de la périphérie du rotor qu'un courant d'air généré par le rotor est conduit dans le boîtier de réceptacle (2).

2. Ensemble de tondeuse à gazon selon la revendication 1, **caractérisé en ce que** la partie inférieure ouvrable (17) est reliée de manière pivotante (24) à des parties supérieures de pièces d'extrémité opposées (18) pour le boîtier de réceptacle (2).

3. Ensemble de tondeuse à gazon selon la revendication 1 ou 2, **caractérisé en ce qu'**un axe de pivotement (24) pour la partie inférieure ouvrable est sensiblement parallèle à l'axe de rotation du rotor (5).

4. Ensemble de tondeuse à gazon selon l'une quelconque des revendications 1 à 3, **caractérisé en ce que** le boîtier de réceptacle (2) présente un bord de racle (26) pour racler l'herbe coupée depuis la partie inférieure ouvrable (17) lors de son ouverture.

5. Ensemble de tondeuse à gazon selon l'une quelconque des revendications 1 à 4, **caractérisé en ce qu'**il est disposé sur le moyen d'entraînement du boîtier de réceptacle (2) pour ouvrir et fermer la partie inférieure ouvrable (17).

6. Utilisation d'un ensemble de tondeuse à gazon selon les revendications 1 à 5 pour tondre les terrains de golf, principalement les greens des terrains de golf.
